Europäisches Patentamt

(19) European Patent Office

Office européen des brevets

(11) Publication number: **0 069 711**
A2

# (12) EUROPEAN PATENT APPLICATION

(21) Application number: 82830192.9

(22) Date of filing: 28.06.82

(51) Int. Cl.³: **B 62 D 1/08**

(30) Priority: 06.07.81 IT 6794081

(43) Date of publication of application:
12.01.83 Bulletin 83/2

(84) Designated Contracting States:
DE FR GB

(71) Applicant: FERRERO GUILO S.p.A.
Via Don Sapino 134
I-10040 Savonera (Torino)(IT)

(72) Inventor: Ferrero, Ferruccio
Corso Peschiera 265
I-10141 Torino(IT)

(72) Inventor: Camana, Giancarlo
Via Bardonecchia 13
I-10093 Collegno (Torino)(IT)

(74) Representative: Notaro, Giancarlo et al,
c/o Jacobacci-Casetta & Perani S.p.A. Via Alfieri, 17
I-10121 Torino(IT)

(54) Safety steering wheel for motor vehicles.

(57) In a safety steering wheel for motor vehicles, the spokes
(5), being of the telescopic type, are variable in length and
include resilient means (89) which oppose their contraction,
and stop means (83) which delimit their maximum exten-
sion.

FIG. 2

EP 0 069 711 A2

## Safety steering wheel for motor vehicles

The present invention relates to safety steering wheels for motor vehicles. In particular, the invention is concerned with a safety steering wheel for motor vehicles, of the type comprising a rim, a hub, and at least two resiliently-deformable spokes connecting the hub to the rim.

In safety steering wheels for motor vehicles of the aforesaid type, the spokes connecting the rim to the hub are arranged to deform resiliently in the event of an impact of the driver against the steering wheel following a collision of the motor vehicle.

The object of the present invention is to provide a safety steering wheel of the type mentioned above, which has a simpler structure and is more economical to manufacture than safety steering wheels made until now.

In order to achieve this object, the present invention has as its subject a safety steering wheel of the aforesaid type, characterised in that each spoke includes two elements fitted together in a mutually telescopic manner and articulated at their free ends to the rim and the hub of the steering wheel respectively, resilient means interposed under compression between the two elements of each spoke, and stop means arranged to define a position of maximum extension of each spoke.

By virtue of this characteristic, the safety steering wheel according to the present invention has a simple, reliable structure which is economical to manufacture. Moreover, it is arranged to deform resiliently in the event of an impact of the driver against it and reassume its initial undeformed configuration after the impact.

Further characteristics and advantages of the present invention will emerge from the description which follows with reference to the appended drawings, provided purely by way of non-limiting example, in which:

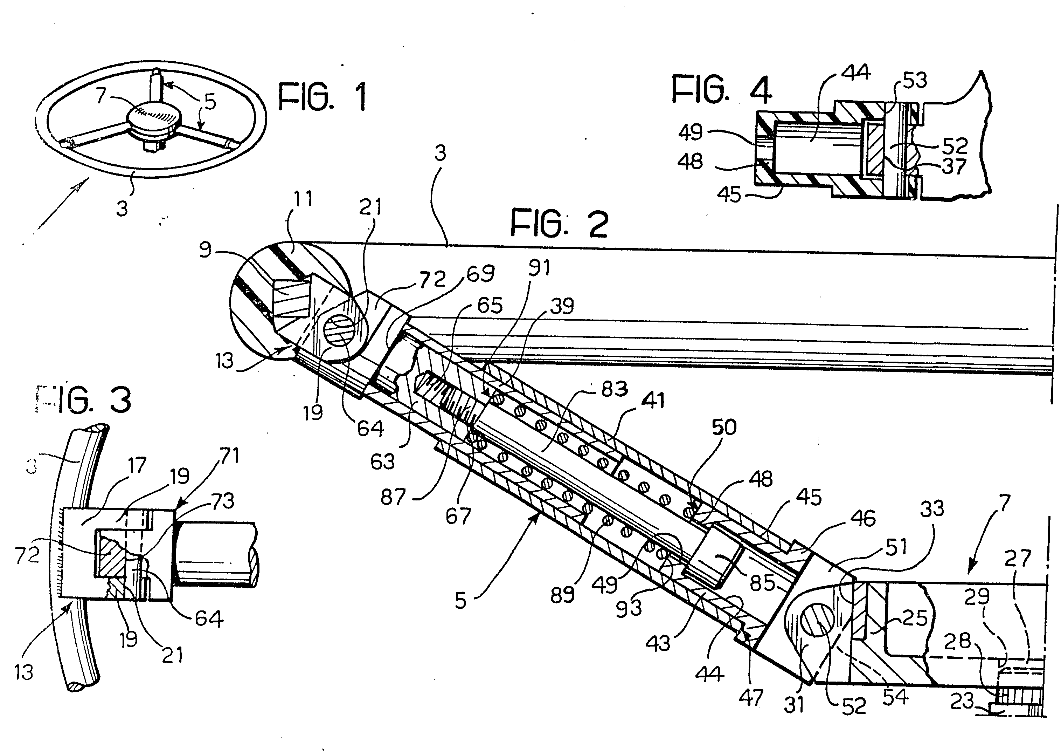

Figure 1 is a perspective view of the safety steering wheel according to the present invention;

Figure 2 is a sectional view of a detail of Figure 1 on an enlarged scale;

Figure 3 is a plan view of a detail of Figure 1, and

Figure 4 is a plan view of a further detail of Figure 1.

In the present description and the claims which follow, the terms "meridian" and "meridian plane" refer to a plane substantially coplanar with the plane defined by the rim in the undeformed condition of the steering wheel, and the terms "axial" and "axially" refer to an axis which is substantially perpendicular to the meridian plane and passes through the hub of the steering wheel.

In the drawings, a safety steering wheel 1 comprises a rim 3, three spokes 5, and a hub 7 connected to the rim 3 by the spokes 5. The rim 3 comprises an annular core 9 and a cover 11 in the form of a tubular body which surrounds the core 9 and is fixed thereto. The means connecting the rim 3 to the spokes 5 include a fork 13 having a base plate 17 welded to the annulus 9 and two parallel arms 19 which extend perpendicular to the base plate 17, the arms 19 having respective holes 21 with a common axis parallel to the base plate 17.

The hub 7, for connecting the steering wheel 1 to a steering column 23, comprises a cylindrical element 25 with an axial hole 27 having a splined surface 29. One end 28 of the steering column 23, which is also splined, is inserted in the hole 27. The means for connecting the hub 7 to each spoke 5 are constituted by a radial tab 31 which projects from the outer surface 33 of the hub 7 and has a hole 37 parallel to the holes 21.

Reference numeral 39 indicates a tubular element which is fitted telescopically in a tubular element 41.

A socket member 43 having an internal surface 44 and an external surface 45 is fixed within the element 41 and, at its mouth, has an annular flange 46 in contact with an end surface 47 of the tubular element 41. The socket member 43 has a base wall 48 with an axial hole 49. At its end opposite the base wall 48, the socket member 43 is further provided with two lugs 51 having holes 53 with a common axis and diameters corresponding to that of the hole 37. The socket member 43 is articulated to the hub 7 by means of a pin 52 which is engaged in the holes 37, 53 of the radial tab 31 and the lugs 51.

A cylindrical element 63 is fixed within the end of the tubular element 39 facing the rim. The element 63 includes two end surfaces 67, 69 perpendicular to its axis, and a threaded axial blind hole 65 extending from the surface 67 towards the interior of the element. An appendage 71 is fixed to the surface 69 of the element 63 and has a tongue 72 inserted between the two arms 19 of the fork 13. The tongue 72 has a hole 73 with an axis coincident with the axis of the holes 21. The cylindrical element 63 is articulated to the fork 13 by means of a pin 64 which is engaged in the holes 21, 73 of the fork 13 and the tongue 72.

Reference numeral 83 indicates a screw having a head 85 which bears on the base wall 48 of the socket member 43. A threaded end 87 of the screw 83 is engaged in the threaded hole 65 of the cylindrical element 63.

A helical spring 89 is located within the tubular elements 39, 41. The spring 89 accommodates the screw 83 within it. Two ends 91, 93 of the spring 89 bear against two surfaces 67, 50 of the cylindrical element 63 and the base wall 48 of the socket member 43 respectively.

Each of the lugs 51 has an abutment surface 54 for

- 4 -

coming into contact with the outer surface 33 of the element 25 to define an end of travel position for the spoke, in which the axis of the latter lies in the meridian plane passing through the hub.

The operation of the safety steering wheel is as follows.

In the undeformed position, the springs 89 keep the tubular elements 39, 41 of each spoke in the position of maximum mutual spacing, this position being determined by the engagement of the head of the screw 83, which is tightened in the hole 65, with the base wall 48 of the socket member 43.

In the event of an impact against the rim 3 of the steering wheel, the tubular elements 39 are arranged to retract into the tubular elements 41, overcoming the force of the springs 89. The resulting reduction in the length of the spokes 5 allows a displacement and/or an inclination of the meridian plane passing through the rim 3 of the steering wheel relative to the meridian plane passing through the hub of the wheel.

**0069711**

CLAIMS

1. Safety steering wheel for motor vehicles, comprising a rim, a hub, and at least two resiliently deformable spokes connecting the hub to the rim, characterised in that each spoke (5) comprises two elements (39, 41) fitted together in a mutually telescopic manner and articulated at their free ends to the rim (3) and the hub (7) of the steering wheel respectively, resilient means (89) interposed under compression between the two elements (39, 41) of each spoke (5), and stop means (83) arranged to define a position of maximum extension of each spoke.

2. A safety steering wheel according to Claim 1, characterised in that the hub (7) and the rim (3) lie in two planes which are perpendicular to the axis of the steering wheel, and are spaced apart when the spokes (5) are in their condition of maximum extension.

3. A safety steering wheel according to Claim 1, characterised in that the two elements (39, 41) of each spoke are in the form of tubular elements, one of which has an internal annular abutment surface lying in a plane perpendicular to the axis of the tubular elements, and in that the stop means (83) are constituted by a screw having its head (85) bearing on the annular abutment surface and its opposite end (87) screwed into a body (63) fixed to the other tubular element of the spoke (5).

4. A safety steering wheel according to Claim 1, characterised in that the resilient means (5) are constituted by a helical spring.

- 6 -

0069711

5. A safety steering wheel according to Claim 1, characterised in that end of travel means for limiting the angular travel of the spoke relative to the hub (7) are associated with each spoke (5).

6. A safety steering wheel according to Claim 1, characterised in that the end of travel means define an end of travel position in which the axis of the spoke (15) lies in a meridian plane passing through the hub.

7. A safety steering wheel according to Claim 1 or 5, characterised in that end of travel means for limiting the angular travel of the spoke (5) relative to the rim (3) are associated with each spoke (5).

FIG. 1

FIG. 2

FIG. 3

FIG. 4

1/1

0069711